# EUROPÄISCHE PATENTSCHRIFT

(11) **EP 2 153 085 B1**
(45) Veröffentlichungstag und Bekanntmachung des Hinweises auf die Patenterteilung: **15.06.2011**
(21) Anmeldenummer: 08735350.4
(22) Anmeldetag: 22.04.2008
(51) Int. Cl.: F16F 15/16, F15B 11/17

(54) **TORSIONSSCHWINGUNGSDÄMPFERSYSTEM FÜR DEN ANTRIEBSSTRANG EINES FAHRZEUGS**
TORSIONAL VIBRATION DAMPING SYSTEM FOR THE DRIVE TRAIN OF A VEHICLE
SYSTÈME D'AMORTISSEMENT DES VIBRATIONS DE TORSION POUR LA CHAÎNE D'ENTRAÎNEMENT D'UN VÉHICULE

(30) Priorität: 08.05.2007 DE 102007021436
(43) Veröffentlichungstag der Anmeldung: 17.02.2010
(73) Patentinhaber: ZF Friedrichshafen AG, 88038 Friedrichshafen (DE)
(72) Erfinder: CARLSON, Cora, 97456 Dittelbrunn (DE); ORLAMÜNDER, Andreas, 97453 Schonungen (DE); BUSOLD, Thomas, 36039 Fulda (DE); DÖGEL, Thomas, 97688 Bad Kissingen (DE)
(74) Vertreter: Ruttensperger, Bernhard
(86) Internationale Anmeldenummer: PCT/EP2008/003217
(87) Internationale Veröffentlichungsnummer: WO 2008/135158

(56) Entgegenhaltungen:
- DE-A1- 2 742 664
- DE-A1- 3 834 201
- DE-A1- 4 308 113
- DE-A1- 19 753 915
- US-A- 5 761 969

## Beschreibung

### Technisches Gebiet

Die vorliegende Erfindung betrifft ein Torsionsschwingungsdämpfersystem für den Antriebsstrang eines Fahrzeugs, umfassend eine Primärseite und eine über eine Dämpferfluidanordnung mit der Primärseite zur Drehung um eine Drehachse und zur Relativdrehung bezüglich einander gekoppelte Sekundärseite, wobei die Dämpferfluidanordnung ein ein Drehmoment zwischen der Primärseite und der Sekundärseite übertragendes erstes Dämpferfluid mit geringerer Kompressibilität umfasst und ein bei Druckerhöhung des ersten Dämpferfluids belastetes zweites Dämpferfluid mit höherer Kompressibilität umfasst, ferner umfassend eine Drehdurchführung zur Zufuhr/Abfuhr von erstem Dämpferfluid zu wenigstens einer erstes Dämpferfluid enthaltenden Verdrängungskammer der Dämpferfluidanordnung, deren Volumen bei Relativdrehung der Primärseite bezüglich der Sekundärseite veränderbar ist, wodurch die Belastung des zweiten Dämpferfluids durch das erste Dämpferfluid veränderbar ist, ferner umfassend ein Druckfluiderzeugungssystem zur Bereitstellung von über die Drehdurchführung der Dämpferfluidanordnung zuzuführendem erstem Dämpferfluid.

### Stand der Technik

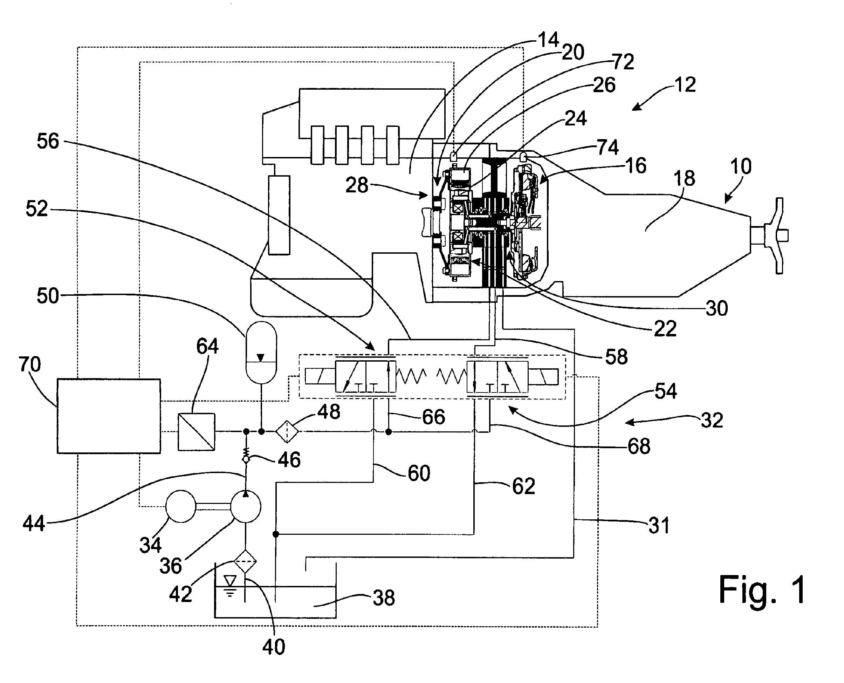

Ein derartiges Torsionsschwingungsdämpfersystem ist in der Fig. 1 allgemein dargestellt. Man erkennt in der Fig. 1 das in einen Antriebsstrang 10 integrierte Torsionsschwingungsdämpfersystem 12, das im Wesentlichen zwischen einem Antriebsaggregat 14, also beispielsweise einer Brennkraftmaschine, und einer Kupplung 16 bzw. einem Getriebe 18 wirksam ist. Das Torsionsschwingungsdämpfersystem 12, das im Wesentlichen auch nach Art eines Zweimassenschwungrads aufgebaut ist, umfasst eine mit der Antriebswelle des Aggregats 14 zu koppelnde Primärseite 20 und eine das Drehmoment in Richtung Kupplung 16 weiterleitende Sekundärseite 22. Die Primärseite 20 und die Sekundärseite 22 begrenzen nur schematisch angedeutete Verdrängungskammern 24, in welchen im Wesentlichen inkompressibles erstes Dämpferfluid, wie z.B. Öl o.dgl., angeordnet ist. Bei durch Drehmomentschwankungen oder ein zu übertragendes Drehmoment ausgelösten Relativdrehungen zwischen der Primärseite 20 und der Sekundärseite 22 wird dieses erste Dämpferfluid aus den Verdrängungskammern 24 verdrängt und belastet ein in dafür vorgesehenen Kammern 26 enthaltenes zweites Dämpferfluid, das eine höhere Kompressibilität aufweist, beispielsweise ein Gas ist. Durch diese Belastung des stärker kompressiblen zweiten Dämpferfluids wird eine Kompressionswirkung erzielt, die eine Rückstellkraft erzeugt, um die Primärseite 20 und die Sekundärseite 22 in Richtung einer Neutral-Relativdrehlage bezüglich einander zurückzubewegen. Durch Variation des Drucks des ersten Dämpferfluids wird es möglich, die Wirkcharakteristik der im Wesentlichen das erste Dämpferfluid und das zweite Dämpferfluid umfassenden Dämpferfluidanordnung 28 einzustellen. Hierzu ist eine allgemein mit 30 bezeichnete Drehdurchführung vorgesehen, über welche das erste Dämpferfluid in die Verdrängungskammern 24 unter Druck eingeleitet werden kann bzw. auch aus diesen abgezogen werden kann.

Ein außerhalb des rotierenden Systembereichs angeordnetes Druckfluiderzeugungssystem ist in der Fig. 1 allgemein mit 32 bezeichnet. Dieses Druckfluiderzeugungssystem 32 umfasst eine beispielsweise durch einen Elektromotor 34 angetriebene Druckfluidpumpe 36, die Fluid aus einem Reservoir 38 über eine Saugleitung 40 und einen Fluidfilter 42 aufnimmt und über eine Druckleitung 44 mit Rückschlagventil 46 und einem weiteren Fluidfilter 48 abgibt. In dieser Druckleitung 44 ist weiterhin ein Druckspeicher 50 vorgesehen, der in Strömungsrichtung des Druckfluids stromabwärts des Rückschlagventils 46 vorgesehen ist. Bei deaktivierter Druckfluidpumpe 36 kann somit eine Versorgung der Primärseite 20 bzw. der Sekundärseite 22 mit unter Druck stehendem ersten Dämpferfluid aus dem Druckspeicher 50 erfolgen. Zwei Schaltventile 52, 54, welche entweder diskret, also mit Auf/Zu-Schaltbarkeit, oder kontinuierlich arbeiten können, also entweder proportional, progressiv, degressiv oder kennlinienabhängig arbeiten können, sorgen dafür, dass über weiterführende Fluidleitungen 56, 58 die Druckfluidleitung 44 bzw. der Druckspeicher 50 wahlweise in Verbindung gebracht werden können mit den Verdrängungskammern 24, um den Druck des ersten Dämpferfluids darin zu erhöhen, oder dass wahlweise die Verdrängungskammern 24 und somit die Fluidleitungen 56, 58 in Verbindung gebracht werden können mit zum Fluidreservoir 38 zurückführenden Fluidleitungen 60, 62. Es sei in diesem Zusammenhang darauf hingewiesen, dass die beiden Fluidleitungen 56, 58 über die Drehdurchführung 30 jeweils in Verbindung stehen mit verschiedenen Gruppen von Verdrängungskammern 24, von welchen eine erste Gruppe im Zugzustand wirksam ist, also bei Drehmomentübertragung vom Antriebsaggregat 14 auf die Kupplung 16 auf Kompression belastet wird, während die andere Gruppe dann auf Kompression belastet wird, wenn das System im Schubzustand, also Motorbremszustand ist, in dem ein Drehmoment von der Kupplung 16 in Richtung Antriebsaggregat 14 zu übertragen ist. Wie die Fig. 1 zeigt, ist dann, wenn eine Gruppe dieser Verdrängungskammern 26 über das zugeordnete Ventil (hier das Ventil 52) in Verbindung mit der Druckleitung 44 ist, die andere Gruppe von Verdrängungskammern 26 oder das zugeordnete Ventil (hier das Ventil 54) in Verbindung mit einer jeweiligen der Leitungen 60 bzw. 62 und somit dem Fluidreservoir 38. Über eine Drainageleitung 31 kann Leckageöl aus der Drehdurchführung 30 zum Fluidreservoir 38 zurückgeleitet werden.

Ein Drucksensor 64 erfasst den Druck in der Druckleitung 44 bzw. den zu den Ventilen 52, 54 führenden Druckleitungsabschnitten 66, 68 und liefert ein entsprechendes Drucksignal an eine Ansteuervorrichtung 70. Diese empfängt weiterhin Signale von Drehzahlsensoren 72, 74, von welchen der Drehzahlsensor 72 die Drehzahl der Primärseite 20 erfasst, während der Drehzahlsensor 74 die Drehzahl der Sekundärseite 22 erfasst. Auf Grundlage dieser und erforderlichenfalls weiterer Signale bzw. Informationen steuert die Ansteuervorrichtung 70 einerseits den Motor 34 an, um erforderlichenfalls den Druck in der Druckfluidleitung 44 zu erhöhen, und steuert die Ansteuervorrichtung 70 weiterhin die Ventile 52, 54 an, um abhängig vom Relativdrehzustand bzw. auch der Relativdrehgeschwindigkeit der Primärseite 20 bezüglich der Sekundärseite 22 die beiden Gruppen von Verdrängungskammern 24 in Verbindung mit der Druckfluidleitung 44 bzw. dem Fluidreservoir 38 zu bringen.

Bei dem vorangehend mit Bezug auf die Fig. 1 hinsichtlich des prinzipiellen Aufbaus beschriebenen Torsionsschwingungsdämpfersystem besteht grundsätzlich ein Defizit dahingehend, dass einerseits auf Grund des Vorsehens einer einzigen Druckfluidpumpe ein Kompromiss zwischen einer Optimierung hinsichtlich des Fördervolumens bzw. des maximal erreichbaren Drucks eingegangen werden muss. Andererseits stellt diese Druckfluidpumpe mit dem zugehörigen Antrieb eine zusätzliche Baugruppe dar, die selbstverständlich zusätzlichen Bauraum beansprucht und zusätzliches Gewicht bzw. zusätzliche Kosten verursacht.

Aus der DE 27 42 664 A1 ist ein als schwingungssdämpfende Kupplung ausgebildete, dem Oberbegriff entsprechendes Torsionsschwingungsdämpfungssystem bekannt. Bei diesem System sind zur Übertragung von Drehmomenten durch Dämpfungsteile Drosselspalte bzw. flüssigkeitsgefüllte Kammem gebildet, die mit einem zentralen Reservoir für die Dämpfungsflüssigkeit verbunden sind. Ein Ausgleichsraum für verdrängte Dämpfungsflüssigkeit ist durch einen vermittels eines verschiebbaren Kolbens beaufschlagten Druckzylinder gebildet.

### Darstellung der Erfindung

Es ist die Zielsetzung der vorliegenden Erfindung die durch die technischen Merkmale des unabhängigen Anspruchs 1 bzw. 7 definiert ist, ein Torsionsschwingungsdämpfersystem vorzusehen, das hinsichtlich der Fördereffizienz des zur Erlangung der Schwingungsdämpfungsfunktionalität erforderlichen ersten Dämpferfluids verbessert ist bzw. auch eine verbesserte Bauraumausnutzung ermöglicht.

Diese Aufgabe wird grundsätzlich gelöst durch ein Torsionsschwingungsdämpfersystem für den Antriebsstrang eines Fahrzeugs, umfassend eine Primärseite und eine über eine Dämpferfluidanordnung mit der Primärseite zur Drehung um eine Drehachse und zur Relativdrehung bezüglich einander gekoppelte Sekundärseite, wobei die Dämpferfluidanordnung ein ein Drehmoment zwischen der Primärseite und der Sekundärseite übertragendes erstes Dämpferfluid mit geringerer Kompressibilität umfasst und ein bei Druckerhöhung des ersten Dämpferfluids belastetes zweites Dämpferfluid mit höherer Kompressibilität umfasst, ferner umfassend eine Drehdurchführung zur Zufuhr/Abfuhr von erstem Dämpferfluid zu wenigstens einer erstes Dämpferfluid enthaltenden Verdrängungskammer der Dämpferfluidanordnung, deren Volumen bei Relativdrehung der Primärseite bezüglich der Sekundärseite veränderbar ist, wodurch die Belastung des zweiten Dämpferfluids durch das erste Dämpferfluid veränderbar ist, ferner umfassend ein Druckfluiderzeugungssystem zur Bereitstellung von über die Drehdurchführung der Dämpferfluidanordnung zuzuführendem ersten Dämpferfluid.

Gemäß einem ersten Aspekt der Erfindung laut Anspruch 1 ist dabei weiter vorgesehen, dass das Druckfluiderzeugungssystem wenigstens zwei Druckfluidpumpen umfasst.

Durch das Vorsehen von wenigstens zwei Druckfluidpumpen wird es möglich, diese so auszugestalten, dass sie für die bestehenden Anforderungen optimiert sind. Beispielsweise kann vorgesehen sein, dass eine der Druckfluidpumpen zur Erzeugung eines größeren Volumenstroms ausgebildet ist und eine andere der Druckfluidpumpen zur Erzeugung eines größeren Fluiddrucks ausgebildet ist. Je nachdem, ob also abhängig vom Betriebszustand ein großer Volumenstrom oder ein großer Maximaldruck erforderlich ist, ist es möglich, eine dieser Druckfluidpumpen dann in Betrieb zu setzen.

Jeder dieser Druckfluidpumpen kann ein eigenständiger Antrieb zugeordnet sein. Alternativ ist es insbesondere zum Einsparen von Kosten und zum Einsparen von Gewicht und Bauraum möglich, dass mehrere Druckftuidpumpen durch einen gemeinsamen Druckfluidpumpenantrieb antreibbar sind.

Wenigstens einer der Druckfluidpumpenantriebe kann einen Elektromotor umfassen. Weiterhin ist es möglich, dass jeder Druckfluidpumpe ein Druckspeicher zugeordnet ist.

Gemäß einem weiteren Erfindungsaspekt laut Anspruch 7 wird bei einem grundsätzlichen erfindungsgemäßen Aufbau eines Torsionsschwingungsdämpfersystems vorgeschlagen, dass das Druckfluiderzeugungssystem eine in einer Getriebeanordnung angeordnete Getriebeölpumpe umfasst.

Insbesondere in Autornatikgetrieben sind derartige Getriebeölpumpen vorhanden, nicht zuletzt, um auch einen bei derartigen Getrieben allgemein vorgesehenen hydrodynamischen Drehmomentwandler mit Arbeitsöl zu versorgen. Diese Getriebeölpumpe kann zusätzlich dazu genutzt werden, den erforderlichen Fluiddruck für das erste Dämpferfluid bereitzustellen, wobei dann selbstverständlich das Getriebeöl, also das durch das Getriebeöl geförderte Medium, auch das erste Dämpferfluid bereitstellen kann, also die Gefiebeölpumpe eine der Druckfluidpumpen bilden kann.

Weiterhin ist bei einem derartigen System vorgesehen, dass das Druckfluiderzeugungssystem ferner eine durch einen Pumpenantriebsmotor anzutreibende Druckfluidpumpe umfasst.

Um eine nachteilhafte Wechselwirkung zwischen der Getriebeölpumpe und der zusätzlichen Druckfluidpumpe zu vermeiden, wird vorgeschlagen, dass die Druckfluidpumpe durch eine Ventilanordnung von dem Druckfluidkreislauf der Getriebepumpe abkoppelbar ist.

Der Druckfluidpumpe kann ein Druckspeicher zugeordnet sein.

Gemäß einer vorteilhaften Weiterbindung der vorliegenden Erfindung laut Anspruch 10 wird vorgeschlagen, dass dem ersten Dämpferfluid eine Wärmetauscheranordnung zur Erwärmung desselben zugeordnet ist. Auf diese Art und Weise wird eine ausreichende Fließfähigkeit des ersten Dämpferfluids gewährleistet, so dass im Wesentlichen keine durch Temperaturveränderungen induzierten Veränderung der Wirkcharakteristik der Dämpferfluidanordnung zu erwarten ist. Dabei kann beispielsweise vorgesehen sein, dass die Wärmetauscheranordnung als Wärmetauschermedium ein Kühlfluid eines Antriebsaggregats nutzt.

### Kurze Beschreibung der Zeichnungen

Die vorliegende Erfindung wird nachfolgend mit Bezug auf die beiliegenden Figuren beschrieben. Es zeigt:
- Fig. 1: den prinzipiellen Aufbau eines Torsionsschwingungsdämpfersystems für den Antriebsstrang eines Fahrzeugs;
- Fig. 2: eine der Fig. 1 entsprechende Ansicht eines erfindungsgemäß aufgebauten Torsionsschwingungsdämpfersystems;
- Fig. 3: eine weitere der Fig. 1 entsprechende Ansicht eines Torsionsschwingungsdämpfersystems;
- Fig. 4: eine weitere der Fig. 1 entsprechende Ansicht eines erfindungsgemäß aufgebauten Torsionsschwingungsdämpfersystems;
- Fig.5: eine weitere der Fig.1 entsprechende Flusicht eines Torsionschingungsdämpfersystems ;
- Fig. 6: eine weitere der Fig. 1 entsprechende Ansicht eines Torsionsschwingungsdämpfersystems;
- Fig. 7: eine weitere der Fig. 1 entsprechende Ansicht eines Torsionsschwingungsdämpfersystems;
- Fig. 8: eine weitere der Fig. 1 entsprechende Ansicht eines Torsionsschwingungsdämpfersystems.

### Bester Weg zur Ausführung der Erfindung

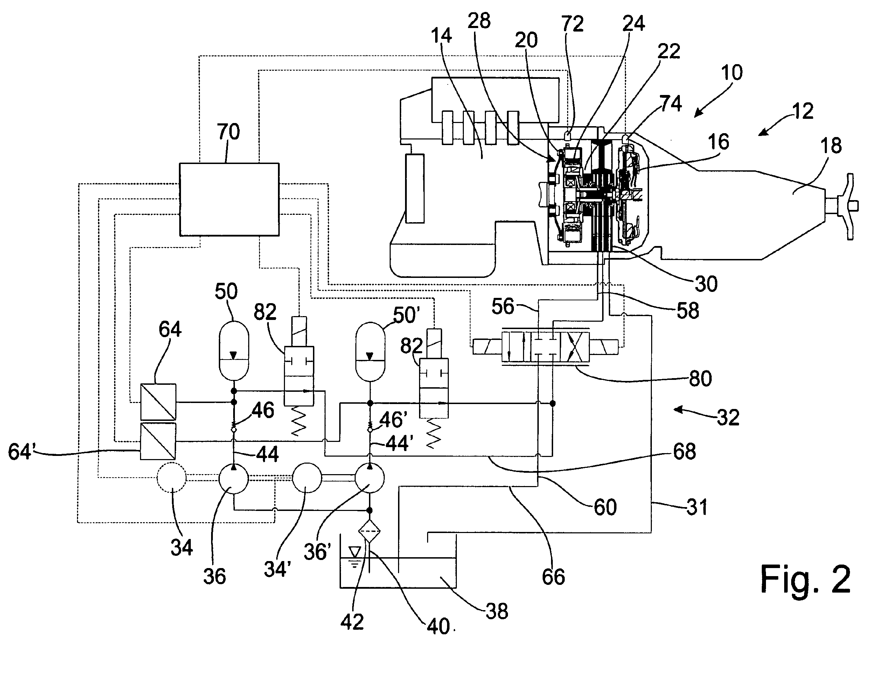

In der Fig. 2 ist ein Antriebsstrang 10 bzw. ein Torsionsschwingungsdämpfersystem 12 für diesen Antriebsstrang 10 gezeigt, bei dem das Druckfluiderzeugungssystem 32 zwei Druckfluidpumpen 36 und 36' umfasst. Jeder dieser Druckfluidpumpen 36, 36' ist ein Elektromotor 34 bzw. 34' als Antrieb zugeordnet, wobei die beiden Motoren wieder unter der Ansteuerung der Ansteuervorrichtung 70 stehen. Beide Pumpen 36, 36' nehmen über die Saugleitung 40 und den Fluidfilter 42 das zu fördernde Fluid vom Fluidreservoir 38 auf und geben es im jeweiligen Pumpbetrieb über Druckleitungen 44, 44' mit darin vorgesehenen Rückschlagventilen 46, 46' ab, durch welche ein Rückfördem durch die Pumpen hindurch verhindert wird. Folgend auf die jeweiligen Rückschlagventile 46, 46' ist jeder der Druckfluidpumpen 36, 36' ein Druckspeicher 50, 50' zugeordnet. Weiterhin folgt im Strömungsweg zu einem Drei-Wege-Ventil 80 dann jeweils ein ebenfalls unter der Ansteuerung der Ansteuervorrichtung 70 stehendes Absperrventil 82, 82', durch welche wahlweise die Verbindung der jeweiligen Druckleitungen 44, 44' mit jeweiligen zum Drei-Wege-Ventil 80 führenden Druckleitungsabschnitten 66, 68 unterbrochen bzw. freigegeben werden kann.

Die beiden Druckfluidpumpen 36, 36' können unterschiedlich ausgelegt sein. So kann beispielsweise die Druckfluidpumpe 36 hinsichtlich der Erzeugung eines größtmöglichen Fluiddrucks optimiert sein, während die Druckfluidpumpe 36' hinsichtlich eines möglichst großen Fluidstroms optimiert sein kann. Ist im Betrieb dann ein vergleichsweise großer Volumenstrom des den verschiedenen Verdrängungskammern 24 zuzuführenden Fluids erforderlich, kann zunächst die Pumpe 36' betrieben werden, um einen derartigen vergleichsweise großen Volumenstrom zu fördern bzw. auch den Druckspeicher 50' entsprechend zu laden. Das Absperrventil 82' ist in seiner Durchlassstellung, so dass über das Drei-Wege-Ventil 80 dann das unter Druck stehende erste Dämpferfluid in die für diesen Betriebszustand vorgesehenen Verdrängungskammern 24 eingeleitet werden kann, während die anderen Verdrängungskammern, also beispielsweise die im Schubzustand wirksamen Verdrängungskammern, über die Fluidleitung 60 zum Reservoir 38 hin freigeschaltet sind. Hat die Druckfluidpumpe 36' hinsichtlich des erreichbaren Drucks ihre Grenze erreicht, kann sie dann deaktiviert werden, woraufhin die Druckfluidpumpe 36 aktiviert wird, um einerseits den Druckspeicher 50 zu laden, sofern erforderlich, und um andererseits über das dann in Freigabestellung geschaltete Absperrventil 82 und das Drei-Wege-Ventil 80 den Fluiddruck in den dafür vorgesehenen Verdrängungskammern 24 zu erhöhen. In diesem Zustand ist das Absperrventil 82' in seiner Sperrstellung, so dass eine Druckrückwirkung über die Druckfluidleitungsabschnitte 66, 68 auf den Druckspeicher 50' nicht möglich ist. Auf diese Art und Weise wird es auch möglich, für die beiden Druckfluidpumpen 36, 36' jeweils auch für die erreichbaren Drücke bzw. Volumenströme optimiert ausgelegte Druckspeicher 50 bzw. 50' einzusetzen.

Die Auslegung bzw. Optimierung der beiden Druckfluidpumpen 36, 36' auf Erzeugung eines größtmöglichen Fluiddrucks bzw. eines größtmöglichen Fluidvolumenstroms kann beispielsweise durch verschiedenartige konstruktive Ausgestaltung erfolgen. So können als Pumpe 36' so genannte Kreiselpumpen eingesetzt werden, die bei einer vorgegebenen Arbeitsfrequenz einen vergleichsweise großen Volumenstrom erzeugen, jedoch nur geringere Drücke erzielen können. So genannte Kolbenpumpen oder Zahnradpumpen sind hinsichtlich des erreichbaren Drucks optimiert.

Die Umschaltung zwischen einem Zugzustand und einem Schubzustand erfolgt durch entsprechende Verstellung des Drei-Wege-Ventils 80, so dass jeweils eine der Gruppen von Verdrängungskammern 24 in Verbindung mit den Druckfluidleitungsabschnitten 66, 68 ist, während die andere Gruppe in Verbindung mit der Fluidleitung 60 steht, oder, wie dies in Fig. 2 auch gezeigt ist, beide Gruppen von Verdrängungskammern 24 abgesperrt sind und somit eine Druckvariation nicht erzeugt werden kann.

Es ist selbstverständlich, dass bei dem in Fig. 2 aufgezeigten Aufbau die beiden Druckfluidpumpen 36, 36' auch durch einen gemeinsamen Antriebsmotor angetrieben werden können, der dann beispielsweise über schaltbare Kupplungen wechselweise mit der einen oder der anderen der Druckfluidpumpen zusammenwirken kann. Die Auslegung der Pumpen 36, 36' spielt vor allem dann eine Rolle, wenn die beiden Pumpen 36, 36' durch einen gemeinsamen Antrieb anzutreiben sind und mithin grundsätzlich auch zum Arbeiten bei gleichen oder ähnlichen Arbeitsfrequenzbereichen vorgesehen sind. Weiterhin ist es selbstverständlich, dass das Aktivieren bzw. Deaktivieren der Druckfluidpumpen 36, 36' unter Berücksichtigung verschiedener Betriebsinformationen, wie z.B. der durch die Drehzahlsensoren 72, 74 gelieferten Information über den Relativdrehzustand von Primärseite 20 und Sekundärseite 22, erfolgen kann.

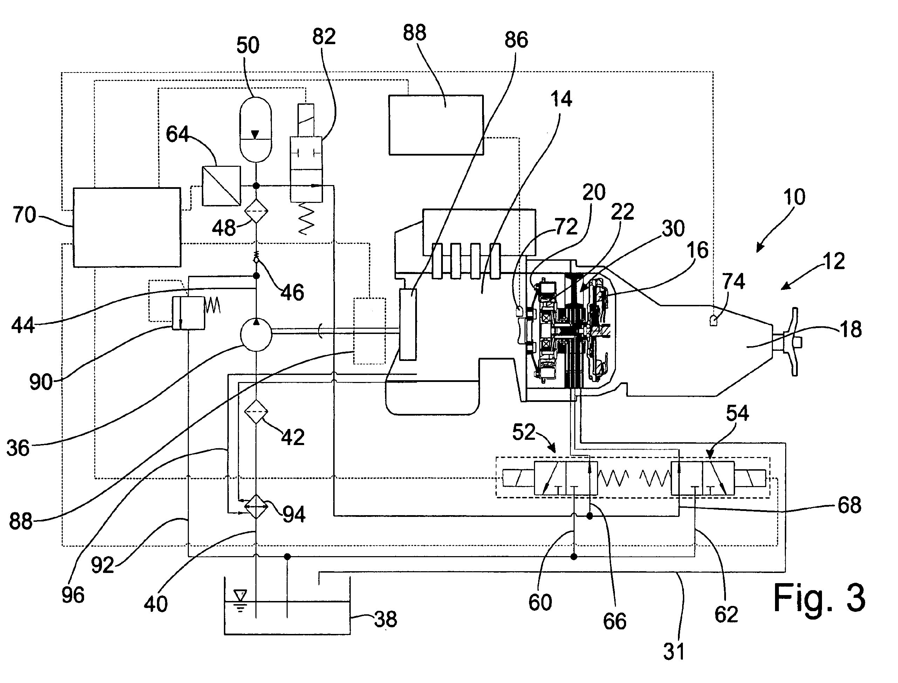

Eine weitere Ausgestaltungsform eines Antriebsstrangs 10 mit einem Torsionsschwingungsdämpfersystem 12 ist in Fig. 3 gezeigt. Bei dieser Ausgestaltungsvariante wird die Druckfluidpumpe 36 nicht durch einen eigenen, ihr zugeordneten Antriebsmotor, also beispielsweise Elektromotor angetrieben, sondern das Antriebsaggregat 14, also beispielsweise eine Brennkraftmaschine, liefert das Antriebsdrehmoment.

Dazu kann beispielsweise ein nur symbolisch angedeuteter Riementrieb 86 des Antriebsaggregats 14 genutzt werden, um die Druckfluidpumpe 36 zu betreiben. Beispielsweise kann eine an der Kurbelwelle vorgesehene Riemenscheibe die Druckfluidpumpe 36 antreiben, oder es kann eine für eine Lichtmaschine, Wasserpumpe, einen Klimakompressor oder eine Lenkhilfspumpe vorgesehene Riemenscheibe direkt oder durch Kopplung mit einer separaten Riemenscheibe genutzt werden. Insbesondere beim Einsatz einer separaten Riemenscheibe kann ein für den Betrieb der Druckfluidpumpe 36 optimiertes Übersetzungs- bzw. Untersetzungsverhältnis gewählt werden, um mit der Druckfluidpumpe 36 im optimalen Drehzahlbereich zu arbeiten bzw. im optimalen Drehmomentenbereich zu arbeiten. Ferner ist es möglich, ein in der Fig. 3 mit Strichlinie angedeutetes Getriebe 88 im Drehmomentübertragungsweg zwischen dem Antriebsaggregat 14 und der Druckfluidpumpe 36 einzusetzen, um die optimale Drehzahl zu erreichen. Zusätzlich oder alternativ kann im Drehmomentübertragungsweg auch eine schaltbare Kupplung vorgesehen sein, die selbstverständlich durch die Ansteuervorrichtung 70 angesteuert werden kann, um die Druckfluidpumpe 36 wahlweise in Betrieb zu nehmen bzw. außer Betrieb zu setzen. Grundsätzlich kann das Drehmoment für die Druckfluidpumpe 36 auch an anderen Bereichen, beispielsweise im Bereich einer Steuerkette oder eines Königswellenantriebs, abgegriffen werden. Von Bedeutung ist, dass das Antriebsdrehmoment unmittelbar vom Antriebsaggregat 14 geliefert wird, und nicht durch einen separaten Antrieb.

Das von der Druckfluidpumpe 36 unter Druck in die Druckleitung 44 abgegebene erste Dämpferfluid strömt wieder über ein Rückschlagventil 46 und einen Fluidfilter 48 in Richtung zu einem Druckspeicher 50 und über diesen dann durch ein Absperrventil 82 in Richtung zu den beiden Ventilen 52, 54. Ein Motorsteuergerät 88, das beispielsweise das Eingangssignal des eingangsseitigen, also primärseitigen Drehzahlsensors 72 empfangen kann, um entsprechend auch Information über die Motordrehzahl zu haben, liefert Information über den Drehzustand des Antriebsaggregats 14 und somit auch der Primärseite 20 zur Ansteuervorrichtung 70. Hier kann also ein motorinterner Drehzahlsensor 72 genutzt werden, um die Ansteuersignale für den Betrieb des Torsionsschwingungsdämpfersystems 12 zu liefern. Ausgangsseitig, also sekundärseitig, kann das Drehzahlsignal eines im Getriebe 18 vorgesehenen Drehzahlsensors 74 genutzt werden, das beispielsweise direkt in die Ansteuervorrichtung 70 eingespeist werden kann. Grundsätzlich kann hier auch ein Tachosignal genutzt werden, das Information über die Fahrzeuggeschwindigkeit und mithin unter Berücksichtigung des jeweils ausgewählten Gangs im Getriebe 18 über die Drehzahl der Sekundärseite 22 liefern kann.

Es ist weiterhin ein Druckbegrenzungsventil 90 vorgesehen, welches dafür sorgt, dass der Druck des ersten Dämpferfluids in der Druckleitung 44 einen zulässigen Grenzwert nicht überschreitet. Bei Erreichen dieses Grenzwertes öffnet das Druckbegrenzungsventil und erzeugt über eine Fluidleitung 92 eine Druckminderung bzw. Entspannung durch Ableitung eines Teils des geförderten Fluids in Richtung zum Reservoir 38. Selbstverständlich kann ein derartiges Druckbegrenzungsventil auch bei der vorangehend beschriebenen bzw. bei nachfolgenden noch zu beschreibenden Ausgestaltungsformen vorgesehen sein.

Bei dem in Fig. 3 gezeigten System besteht ein wesentlicher Vorteil darin, dass ein eigener Antriebsmotor für die Druckfluidpumpe 36 nicht erforderlich ist. Diese kann immer betrieben werden, wenn auch das Antriebsaggregat 14 in Betrieb gesetzt ist.

Um weiterhin dafür zu sorgen, dass das erste Dämpferfluid im Wesentlichen unabhängig von äußeren Umgebungsbedingungen eine gleichmäßige Fließfähigkeit, also Viskosität, aufweist, kann ein Wärmetauscher 94 im Strömungsweg des ersten Dämpferfluids, vorzugsweise im Bereich der Saugleitung 40 vorgesehen sein, um das erste Dämpferfluid zu erwärmen oder ggf. zu kühlen bzw. im Bereich einer bevorzugten Temperatur zu halten. Dem Wärmetauscher 94 kann über einen Kreislauf 96, der beispielsweise vom Kühlkreislauf des Antriebsaggregats 14 abzweigen kann oder einen Teilbereich desselben bilden kann, ein Wärmeträgermedium, also beispielsweise das Kühlmittel des Antriebsaggregats 14, zugeführt werden. Durch das Bereitstellen des ersten Dämpferfluids mit einer vorgegebenen bzw. näherungsweise konstanten Temperatur und entsprechend auch im Wesentlichen konstanter Viskosität kann eine von Umgebungseinflüssen weitgehend unabhängige Schwingungsdämpfungscharakteristik des Torsionsschwingungsdämpfersystems gewährleistet werden.

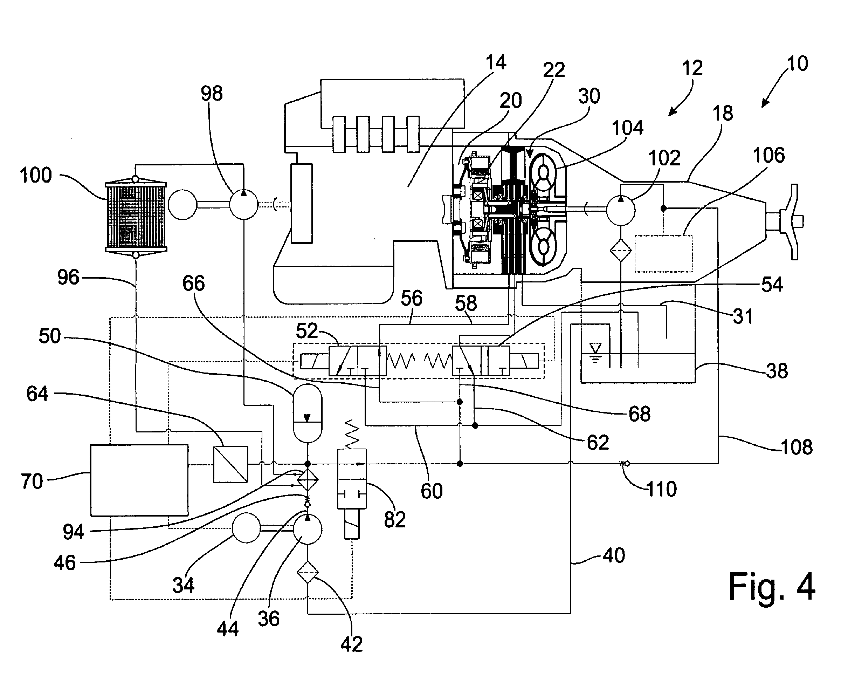

Bei dem in Fig. 4 gezeigten Antriebsstrang 10 bzw. Torsionsschwingungsdämpfersystem 12 ist eine Druckfluidpumpe 36 mit einem elektromotorischen Antrieb 34 vorgesehen, wobei, wie vorangehend bereits dargelegt, die Druckfluidpumpe 36 über eine Druckleitung 44 und Druckleitungsabschnitte 66, 68 Druckfluid zu den beiden Ventilen 52, 54 fördern kann. Auch hier kann im Strömungsweg des Druckfluids bzw. ersten Dämpferfluids wieder ein Wärmetauscher 94 vorgesehen sein, der in einen Kreislauf 96 des Kühlmittels des Antriebsaggregats 14 eingeschaltet ist. Eine vom Antriebsaggregat 14 ebenfalls angetriebene Pumpe 98 sorgt dafür, dass das Kühlmittel durch den Kühler 100, den Kreislauf 96 und somit den Wärmetauscher 94 zirkuliert. Auch hier sei darauf hingewiesen, dass das Miteinbeziehen eines Wärmetauschers in den Strömungsweg des ersten Dämpferfluids bei allen erfindungsgemäßen Ausgestaltungsvarianten realisiert sein kann. Bei derartigen Wärmetauschersystemen kann selbstverständlich an Stelle des Kühlmittels des Antriebsaggregats auch das im Betrieb allgemein erwärmte Getriebeöl als Wärmeträgermedium genutzt werden, so dass der Kreislauf 96 dann beispielsweise nicht an den Kühler 100 des Antriebsaggregats 14 anzukuppeln ist, sondern an einen Getriebeölkühler. Weiterhin ist es selbstverständlich, dass die Pumpe 98 auch durch einen eigenständigen Antrieb angetrieben werden kann, an Stelle des Nutzens des Antriebsdrehmoments des Antriebsaggregats 14.

Man erkennt in Fig. 4 weiter, dass in dem hier als Automatikgetriebe ausgebildeten Getriebe 18 eine Getriebeölpumpe 102 vorgesehen ist. Diese ist angetrieben durch einen hydrodynamischen Drehmomentwandler 104, der wiederum ein Antriebsdrehmoment vom Antriebsaggregat 14 aufnimmt. Im Getriebe 18 ist ein Getriebeölkreislauf 106 vorgesehen. Weiter liefert die Getriebeölpumpe 102 auch den erforderlichen Getriebeölstrom, um den hydrodynamischen Drehmomentwandler 104 mit dem zur Drehmomentwandlung erforderlichen Fluid zu versorgen.

Die Getriebeölpumpe 102 kann das erste Dämpferfluid als Getriebeöl aus dem Reservoir 38 aufnehmen und nicht nur in den Getriebeölkreislauf 106 einspeisen, sondern über eine Leitung 108 und ein Rückschlagventil 110 auch zu den Druckleitungsabschnitten 66, 68 bzw. den Ventilen 52, 54 liefern. Das Fluidreservoir 38 kann ein außerhalb des Getriebes 18 angeordnetes Reservoir sein, kann aber auch als Getriebeölsumpf im Getriebe 18 angeordnet sein. Bei in Sperrschaltung geschaltetem Absperrventil 82 wird der erforderliche Fluiddruck des ersten Dämpferfluids ausschließlich von der Getriebeölpumpe 102 geliefert. Bei beispielsweise nicht aktivierter Druckfluidpumpe 36 und in Offenstellung geschaltetem Absperrventil 82 kann über die Druckfluidpumpe 102 auch der Druckspeicher 50 geladen werden. Das zusätzliche Vorsehen der Druckfluidpumpe 36 kann dann von Vorteil sein, wenn die Getriebeölpumpe 102 nicht derart dimensioniert ist, dass sie die in dem Torsionsschwingungsdämpfersystem 12 erforderlichen maximalen Fluiddrücke erzeugen kann. Grundsätzlich kann jedoch das System der Fig. 4 auch so ausgelegt sein, dass nur die Getriebeölpumpe 102 vorgesehen ist, jedoch keine weitere Druckfluidpumpe, um unter Druck stehendes erstes Dämpferfluid zu liefern.

Es ist selbstverständlich möglich, die zusätzliche Druckfluidpumpe 36 nicht durch einen elektromotorischen Antrieb 34 anzutreiben, sondern beispielsweise so, wie vorangehend in Fig. 3 gezeigt bzw. mit Bezug auf Fig. 3 erläutert, diese durch das Antriebsaggregat 14 anzutreiben. In diesem wären dann beide zur Bereitstellung von unter Druck stehendem ersten Dämpferfluid eingesetzten Pumpen 36 und 102 durch das Antriebsaggregat 14 angetrieben, da selbstverständlich auch die Getriebeölpumpe 102 das Antriebsdrehmoment des Antriebsaggregats 14 nutzt.

Bei der in Fig. 4 gezeigten Ausgestaltungsform kann auch dann, wenn die Getriebeölpumpe 102 unter Berücksichtigung der Tatsache, dass sie auch den Volumenstrom für das erste Dämpferfluid liefern soll, größer dimensioniert wird, als dies an sich bei derartigen Getrieben erforderlich ist, Bauraum gespart werden, insbesondere dann, wenn auf das zusätzliche Vorsehen der Druckfluidpumpe 36 und des ihr zugeordneten Antriebs 34 verzichtet werden kann.

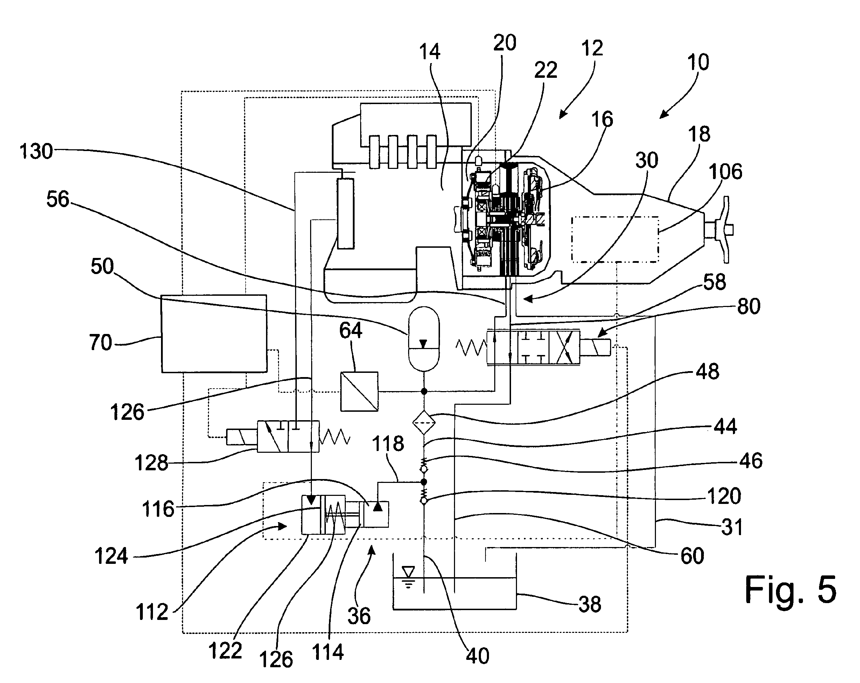

In Fig. 5 sind ein Antriebsstrang 10 bzw. ein Torsionsschwingungsdämpfersystem 12 gezeigt, bei welchen die Druckfluidpumpe 36 durch einen mit einem Druckfluid arbeitenden Pumpenantrieb 112 betrieben wird. In der schematischen Darstellung der Fig. 5 umfasst die Druckfluidpumpe 36 einen Pumpenkolben 114 als Pumporgan, der in einer Förderarbeitskammer 116 hin- und herbewegbar ist. Über einen Leitungsabschnitt 118 steht die Förderarbeitskammer 116 in Verbindung mit der Saugleitung 40, wobei zwischen dem Fluidreservoir 38 und dem Leitungsabschnitt 118 ein Rückschlagventil 120 angeordnet ist, das ein Rückströmen von Fluid in Richtung zum Reservoir 38 hin verhindert. Bei Bewegung des Pumpenkolbens 114 zum Vergrößern des freien Volumens der Förderarbeitskammer wird über den Leitungsabschnitt 118, das Rückschlagventil 120 und die Saugleitung 40 Fluid aus dem Reservoir 38 angesaugt. Bei Bewegung in entgegengesetzter Richtung zum Verringern des freien Volumens der Förderarbeitskammer 116 wird darin enthaltenes Fluid über den Leitungsabschnitt 118 ausgestoßen und über das Rückschlagventil 46 in die Druckleitung 44 geleitet. Durch die alternierende Hin- und Herbewegung des Pumpenkolbens 114 wird also ein entsprechend alternierender Ansaug- und Druckabgabevorgang erzeugt, so dass unter Druck stehendes erstes Dämpferfluid in die Druckleitung 44 und über den Fluidfilter 48 auch in den Druckspeicher 50 bzw. zu einem zur Drehdurchführung 30 führenden Drei-Wege-Ventil 80 geleitet wird.

Der der Druckfluidpumpe 36 zugeordnete Pumpenantrieb 112 umfasst eine Antriebsarbeitskammer 122. In dieser ist ein Antriebskolben 124 hin- und herbewegbar. Der Antriebskolben 124 ist mit dem Pumpenkolben 114 fest verkoppelt. Durch eine Vorspannfeder 126 sind der Antriebskolben 124 und der Pumpenkolben 114 in einer Bewegungsrichtung vorgespannt, und zwar in einer Richtung, in welcher das Volumen der Antriebsarbeitskammer 122 minimiert wird und das Volumen der Förderarbeitskammer 116 maximal gemacht wird.

Über eine Antriebsfluidleitung 126 und ein Schaltventil 128 kann die Antriebsarbeitskammer 122 in Verbindung gebracht werden mit einer Quelle für das unter Druck stehende Arbeitsfluid. Durch Umschalten des Schaltventils 118 kann die Antriebsarbeitskammer 122 in Verbindung mit einer weiteren Arbeitsfluidleitung 130 gebracht werden, welche das Arbeitsfluid im Wesentlichen drucklos in Richtung zu seiner Quelle zurückspeist. Dies bedeutet, dass durch alternierendes Umschalten des Schaltventils 128 entsprechend alternierend der Druck des Arbeitsfluids in der Antriebsarbeitskammer 122 erhöht bzw. gesenkt werden kann, mit der Folge, dass entsprechend auch der Antriebskolben 124 alternierend mit höherem und niedererem Druck belastet wird. Dies führt zu einer Hin- und Herbewegung dieses Antriebskolbens 124 und mithin auch des Pumpenkolbens 114.

Der mit einem derartigen Pumpenantrieb 112 erreichbare Druck des ersten Dämpferfluids entspricht dann, wenn die Kolbenflächen der beiden Kolben 124 und 114 im Wesentlichen gleich groß sind, näherungsweise dem Druck des Arbeitsfluids in der Arbeitsfluidleitung 126. Durch die in Fig. 5 erkennbare Auswahl eines Größenverhältnisses derart, dass der Arbeitskolben 124 eine größere Fläche bereitstellt, als der Pumpenkolben 114, kann jedoch auch eine Übersetzung erlangt werden, so dass beim ersten Dämpferfluid ein größerer Druck erzielbar ist, als der im Bereich des Arbeitsfluids vorhandene Druck.

Als derartiges Arbeitsfluid können verschiedene in einem Kraftfahrzeug vorhandene und unter Druck geförderte Fluide genutzt werden. So ist es beispielsweise möglich, dass Schmierfluid bzw. Schmieröl des Antriebsaggregats 14 zu nutzen, ebenso wie das vorangehend bereits angesprochene Kühlmittel bzw. Kühlwasser. Auch das Hydraulikfluid einer Servolenkung bzw. das Kühlfluid einer Klimaanlage können als derartige Arbeitsfluide genutzt werden, ebenso wie der im Allgemeinen auch unter Druck geförderte Kraftstoff, insbesondere bei Dieselaggregaten. Auch das Hydraulikfluid eines Bremskraftverstärkers bzw. eines ABS-Steuergerätes können genutzt werden, ebenso wie das Scheibenwischwasser oder das Dämpfungsfluid einer Motorlagerung. Auch das in einem Getriebeölkreislauf 106 bereitgestellte und allgemein auch unter Druck stehende Getriebeöl kann, wie durch die gestrichelte Linie in Fig. 5 angedeutet, als derartiges Arbeitsfluid genutzt werden.

Da bei der in Fig. 5 gezeigten Ausgestaltungsvariante das Arbeitsfluid lediglich mittelbar dazu genutzt wird, das unter Druck stehende erste Dämpferfluid bereitzustellen, ist es nicht erforderlich, dass das Arbeitsfluid eine Eigenschaft aufweist, die dieses auch als erstes Dämpferfluid selbst geeignet macht. Ist jedoch dieses Arbeitsfluid auch als erstes Dämpferfluid geeignet, so kann es unmittelbar als derartiges erstes Dämpferfluid zusätzlich mit eingesetzt werden, beispielsweise dadurch, dass über das Schaltventil 118 eine direkte Verbindung zwischen der Arbeitsfluidleitung 126 und der Druckleitung 44 bereitgestellt wird.

Der Vorteil dieser in Fig. 5 gezeigten Ausgestaltungsvariante ist, dass kein zusätzlicher elektromotorisch oder in sonstiger Art und Weise anzusteuernder Pumpenantrieb erforderlich ist. Insbesondere dann, wenn als Schaltventil 128 ein kontinuierlich schaltendes Ventil eingesetzt wird, wird es auch möglich, durch kontinuierliche Änderung der Ventilöffnungen eine entsprechende Variation der Verstellgeschwindigkeit zu erlangen.

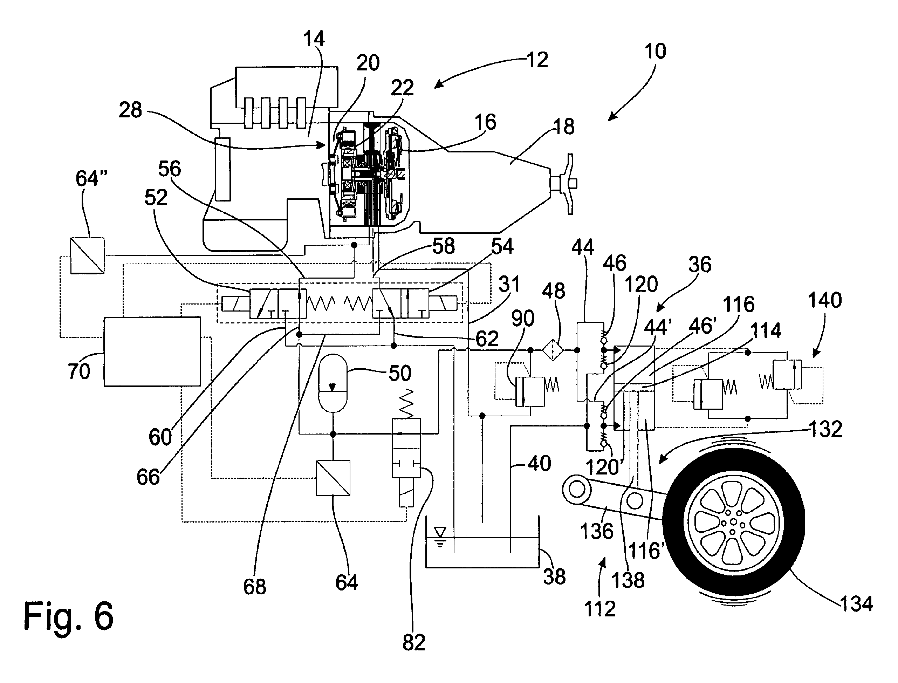

In Fig. 6 ist eine Ausgestaltungsvariante gezeigt, bei welcher die Druckfluidpumpe 36 für das erste Dämpferfluid wiederum ein Pumporgan 114, beispielsweise in Form eines Pumpenkolbens 114, umfasst, das zur Erzeugung des Fluiddrucks hin- und herbewegbar ist. Insbesondere ist hier ein doppelt wirkendes Pumporgan vorhanden, das durch alternierende Hin- und Herbewegung die Volumina zweier Förderarbeitskammern 116, 116' alternierend vergrößert bzw. verringert. Die Saugleitung 40 steht über jeweilige Rückschlagventile 120, 120' in Verbindung mit den beiden Förderarbeitskammern 116 und 116'. Ebenso steht die Druckleitung 44 über zwei Rückschlagventile 46, 46' in Verbindung mit den Förderarbeitskammern 116, 116'. Die Rückschlagventile 120, 120' verhindern ein Rückströmen des ersten Dämpferfluids über die Saugleitung 40 in das Fluidreservoir 38. Die Rückschlagventile 46, 46' verhindern ein Rückströmen des ersten Dämpferfluids aus der Druckleitung 44 in die Förderarbeitskammern 116, 116'. Das aus den Förderarbeitskammern 116, 116' unter Druck ausgestoßene erste Dämpferfluid gelangt über die Druckleitung 44 und einen Fluidfilter 48 zu einem wahlweise umschaltbaren Absperrventil 82, über welches eine Verbindung mit dem Druckspeicher 50 bzw. den zu den Druckregelventilen 52, 54 führenden Druckleitungsabschnitten 66, 68 hergestellt werden kann. Bei übermäßig hohem Druck des ersten Dämpferfluids kann ein Druckbegrenzungsventil 90 öffnen und eine Rückströmung in Richtung zum Fluidreservoir 38 ermöglichen.

Den Antrieb 112 für die Druckfluidpumpe 36 bzw. das Pumporgan 114 liefert die allgemein mit 132 bezeichnete Radaufhängung eines bzw. mehrerer Räder 134 des Fahrzeugs. Beispielsweise kann hier eine an einem Chassis des Fahrzeugs schwenkbar abgelenkte Aufhängungsschwinge 136 als Antriebselement genutzt werden. Die im Fahrbetrieb allgemein auftretende Hin- und Herschwenkbewegung der Aufhängungsschwinge 136 kann über eine hier als Verbindungsstange 138 symbolisch dargestellte Verbindungsanordnung auf den Pumpenkolben 114 übertragen werden, so dass entsprechend der mehr oder weniger periodischen Hin- und Herschwenkbewegung der Aufhängungsschwinge 136 auch der Pumpenkolben 114 sich alternierend hin- und herbewegt und dabei wechselweise die Volumina der beiden Förderarbeitskammern 116, 116' vergrößert bzw. verkleinert. Auf diese Art und Weise kann ohne das Erfordernis, einen zusätzlich anzusteuernden Antrieb vorzusehen, eine im Fahrbetrieb ohnehin auftretende Bewegung bzw. die dabei entstehende Bewegungsenergie zum Antrieb der Druckfluidpumpe 36 genutzt werden.

Es ist selbstverständlich, dass hier jedwede in einem Fahrzeug im Fahrzustand auftretende Relativbewegung zwischen zwei Bauteilen, also beispielsweise dem Chassis und einem Aufhängungsbauteil, genutzt werden kann. Da bei dieser Ausgestaltungsvariante die Druckfluidpumpe 36 immer dann arbeitet und den Druck des ersten Dämpferfluids erhöht, wenn eine derartige Relativbewegung auftritt, ist es vorteilhaft, das Absperrventil 82 bereitzustellen, so dass dann, wenn durch den Drucksensor 64 ein ausreichend hoher Druck in der Druckleitung 44 bzw. dem Druckspeicher 50 erfasst wird, eine weitere Druckerhöhung verhindert werden kann. Bei in die Sperrstellung geschaltetem Absperrventil 82 kann dann durch die Wirkung des Druckbegrenzungsventils 90 eine Überlastung der Druckleitung 44 verhindert werden, wobei dieser Schutz selbstverständlich auch dann wirksam ist, wenn das Absperrventil 82 in seiner Offenstellung ist.

Die Druckfluidpumpe 36 kann grundsätzlich eine eigenständig wirkende Pumpe sein, kann jedoch auch bereitgestellt sein durch einen Stoßdämpfer eines Fahrwerks. Diesem kann ein druckabhängig arbeitender Ventilmechanismus 140 zugeordnet sein, welcher bei entsprechender Druckerhöhung in den verschiedenen Förderarbeitskammern 116, 116' eine Verbindung zwischen diesen herstellen kann und somit eine unter Dämpfungswirkung ablaufende Verschiebung des Pumpenkolbens 114, in diesem Falle dann des Dämpferkolbens, ermöglichen kann. Der bei der Dämpfungsfunktion entstehende Fluiddruck in den Förderarbeitskammern 116, 116' kann grundsätzlich zu der vorangehend beschriebenen Erzeugung des unter Druck stehenden ersten Dämpferfluids genutzt werden. Wird ein bestimmter Druck überschritten, können die Ventilbereiche des Ventilmechanismus 140 öffnen und somit die Dämpfungsfunktion einschalten. Der Druck, bei welchem der Ventilmechanismus zum Bereitstellen einer Dämpfungsfunktion öffnet, ist vorzugsweise derart gewählt, dass er über dem Druck liegt, der für das erste Dämpferfluid in der Druckleitung 44 erforderlich ist. Selbstverständlich ist es auch möglich, andere Dämpfer an einem Fahrzeug, wie z.B. einen Lenkdämpfer, einzusetzen.

Man erkennt in Fig. 6 einen Drucksensor 64", der alternativ zum Drucksensor 64 vorgesehen sein kann, um den Fluiddruck in den Druckfluidleitungen 56, 58 unmittelbar vor der Drehdurchführung zu erfassen. Auf diese Art und Weise können Leitungsverluste den Bereich der Zuführung des ersten Dämpferfluids zu der Drehführung auftreten können, eliminiert werden und mithin die Druckregelung auch unter Berücksichtigung des Fahrzustandes mit höherer Präzision vorgenommen werden. Dies ist selbstverständlich eine vorteilhafte Variante, die auch bei den nachfolgend noch beschriebenen bzw. vorangehend bereits beschriebenen Ausgestaltungsformen angewandt werden kann.

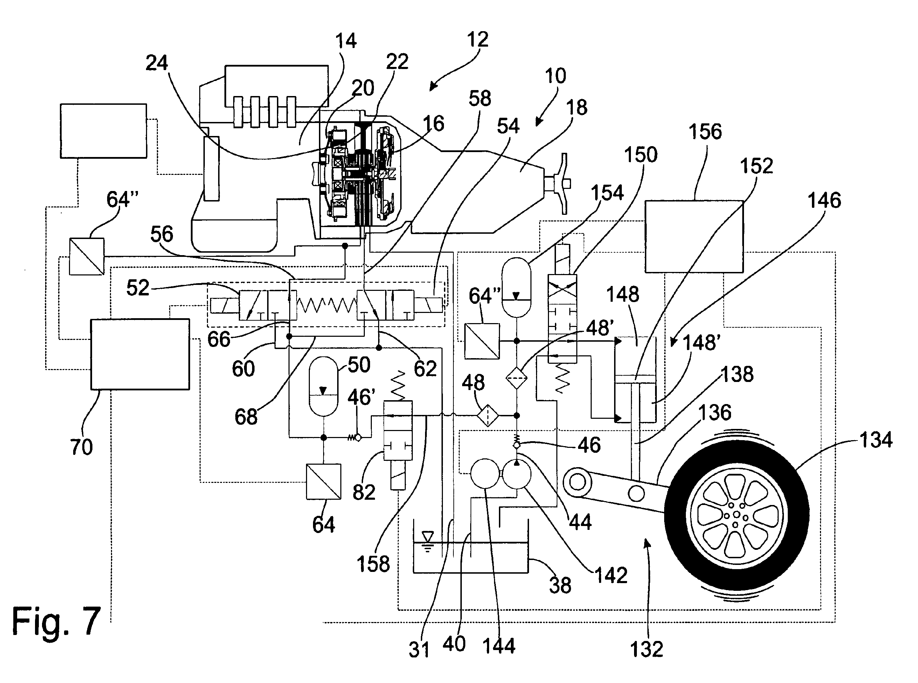

In der Fig. 7 ist eine Ausgestaltungsform eines Torsionsschwingungsdämpfersystems gezeigt, bei welchem eine Druckfluidpumpe 142, welche beispielsweise durch einen elektromotorischen Antrieb 144 angetrieben ist, aus dem Fluidreservoir 38 über die Saugleitung 40 Fluid aufnimmt und dieses über die Druckleitung 44 ausstößt. Dieses unter Druck stehende Fluid dient grundsätzlich als Arbeitsfluid für ein allgemein mit 146 bezeichnetes druckfluidgesteuertes/- geregeltes Fahrwerk. Über ein Drei-Wege-Ventil 150 kann der durch die Druckfluidpumpe 42 erzeugte Fluiddruck bzw. das so geförderte Druckfluid wahlweise in eine der beiden Arbeitskammern 148, 148' geleitet werden, in welchen dann ein Kolben 152 mit dem Druckfluid belastet wird und entsprechend über eine Verbindungsanordnung 138 dann auch eine Kraft auf das Aufhängungssystem 132 übertragen werden kann. Auf diese Art und Weise wird es möglich, die Dämpfungscharakteristik und somit das Fahrverhalten eines Fahrzeugs zu beeinflussen. Der Druckfluidpumpe 142 ist weiterhin ein Druckspeicher 154 zugeordnet, der, ebenso wie das Drei-Wege-Ventil 150, über einen Fluidfilter 48' mit dem Druckfluid versorgt wird. Ein Drucksensor 64"' erfasst den Fluiddruck und liefert ein entsprechendes Signal an eine Steuereinheit 156, welche insbesondere auch den Antrieb 144 für die Druckfluidpumpe 142 ansteuert.

Eine Abzweigung 158 führt nach dem Rückschlagventil 46 von der Druckleitung 44 über einen Fluidfilter 48 zu einem Absperrventil 82 und über dieses und ein weiteres Rückschlagventil 46' zu dem Druckspeicher 50 bzw. den Druckleitungsabschnitten 66, 68. Ist der Fluiddruck für das druckfluidgesteuert/- geregelte Fahrwerk 146 ausreichend hoch bzw. ist dieses System nicht in einem kritischen Steuer-/Regelzustand, so kann das Absperrventil 82 in seine Offenstellung geschaltet werden, um das Druckfluid als erstes Dämpferfluid zum Druckspeicher 50 bzw. den beiden Ventilen 52, 54 zu leiten, so dass auf diese Art und Weise der Fluiddruck in den Verdrängungskammern 24 entsprechend der jeweiligen Fahrsituation eingestellt werden kann. Ist das Aufhängungssystem in einem kritischen Zustand, so wird durch Schalten des Absperrventils 82 in seine Sperrstellung dafür gesorgt, dass der gesamte Fluiddruck, welcher durch die Druckfluidpumpe 142 generiert wird, für das Aufhängungssystem 146 genutzt werden kann. Aus diesem Grund steht das Absperrventil 82 auch unter der Ansteuerung der Steuereinheit 156 für das Fahrwerk 146. Durch das Vorsehen des Rückschlagventils 46 wird sichergestellt, dass Druckvariationen in den Verdrängungskammern 24 nicht auf den Fluiddruck im Bereich des Fahrwerks 146 auswirken können.

Ein elementarer Vorteil der in Fig. 7 gezeigten Ausgestaltungsform besteht darin, dass eine bereits für das Fahrwerk 146 genutzte Druckfluidpumpe auch dazu genutzt wird, den Fluiddruck für das Torsionsschwingungsdämpfersystem bzw. die Verdrängungskammern 24 desselben bereitzustellen, wobei hier also das Druckfluid des Fahrwerks auch als das erste Dämpferfluid genutzt wird.

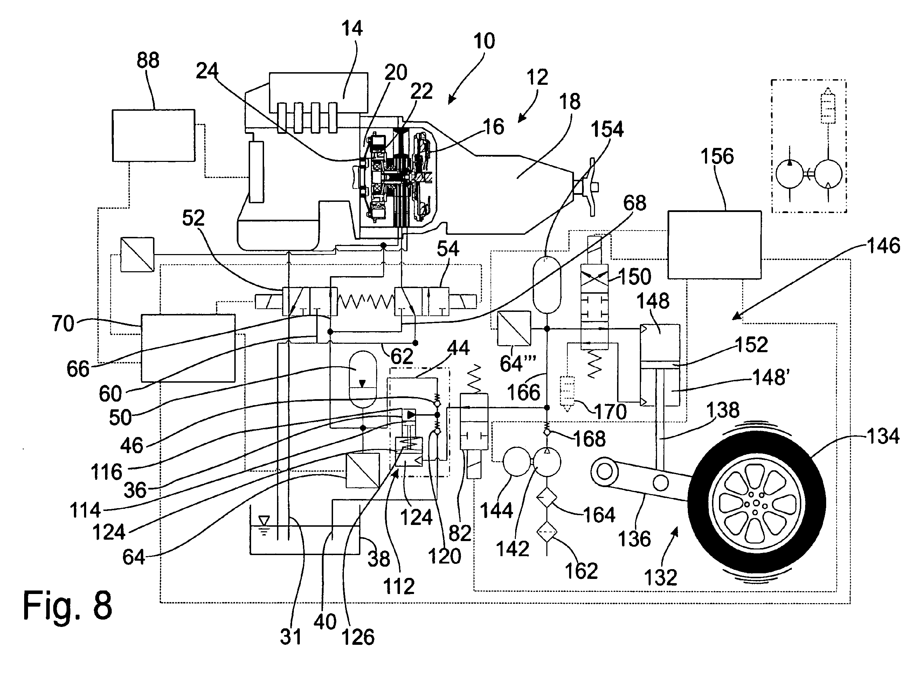

Bei der in Fig. 8 gezeigten Ausgestaltungsform ist ebenfalls ein druckfluidgesteuertes/-geregeltes Fahrwerk 146 vorhanden, wobei hier jedoch als Druckfluid keine Flüssigkeit bzw. kein Öl eingesetzt wird, das sich auch als erstes Dämpferfluid eignet. Vielmehr wird hier als Druckfluid im Fahrwerk146 Luft bzw. ein gasförmiges Medium verwendet. Die Druckfluidpumpe 142 bildet hier also einen beispielsweise elektromotorisch angetriebenen Kompressor, der die Luft über einen Luftfilter 162 und einen Flüssigkeitsabscheider 164 aufnimmt und ihn in über eine Druckluftleitung 166 mit einem Rückschlagventil 168 abgibt. Die Druckluft kann durch entsprechende Schaltung des Drei-Wege-Ventils 150 in die Kammern 148 bzw. 148' eingeleitet werden, um entsprechend das Dämpfungsverhalten des druckluftgesteuerten/-geregelten Fahrwerks 146 bzw. der Aufhängung 132 zu beeinflussen. Die Abgabe der Druckluft nach außen durch das Ventil 150 hindurch erfolgt über einen Schalldämpfer 170.

Um auch hier wieder dafür sorgen zu können, dass in kritischen Situationen die geförderte bzw. bereitgestellte Druckluft auch ausschließlich für das Fahrwerk 146 genutzt wird, ist ein Druckluftabsperrventil 82 vorgesehen, das in eine Sperrstellung gebracht wird, wenn eine derartige kritische Situation vorliegt. Ist dies nicht der Fall, kann das Druckluftabsperrventil 82 in seine Offenstellung gebracht werden, so dass die Druckluft dann in eine Antriebsarbeitskammer 124 eines Antriebs 112 für die Druckfluidpumpe 36 eingeleitet werden kann. Deren Aufbau bzw. Funktionalität entspricht der vorangehend mit Bezug auf die Fig. 5 beschriebenen, so dass auf die diesbezüglichen Ausführungen verwiesen werden kann. Letztendlich stellt bei der in Fig. 8 dargestellten Ausgestaltungsform die Druckluft das Arbeitsfluid zum Antreiben der Druckfluidpumpe bereit. Auch hier kann also durch das alternierende Öffnen und Schließen des Druckluftabsperrventils 82 intermittierend Druckluft in die Abtriebsarbeitskammer 124 eingeleitet bzw. aus dieser abgegeben werden, so dass wieder der Hin- und Herbewegungsbetrieb des Pumpenkolbens 114 erreicht werden kann. Der Druck in der Druckleitung kann durch den Drucksensor 64 erfasst werden und in die Ansteuervorrichtung 70 eingespeist werden, welche dann auch in Wechselwirkung mit den Ansteuerbefehlen der Steuereinheit 156 und auch einem Motorsteuergerät 88 die verschiedenen Ansteuermaßnahmen vornimmt, insbesondere um die beiden Ventile 52, 54 zum Einstellen des Drucks in den verschiedenen Verdrängungskammern 24 anzusteuern. Auch hierzu können selbstverständlich verschiedene Drehzahlsignale an der Primärseite 20 bzw. der Sekundärseite 22 genutzt werden.

Ebenso wie alle vorangehend bereits erläuterten bzw. in den Figuren dargestellten Druckspeicher weisen auch bei dieser Ausgestaltungsform die beiden Druckspeicher 50 und 154 für das erste Dämpferfluid bzw. die Druckluft die wesentliche Funktionalität auf, eine Entlastung der verschiedenen Druckfluidpumpen zu erhalten, da diese nur dann betrieben werden müssen, wenn der Druck in den verschiedenen Druckspeichern gewisse Grenzbereiche unterschreitet. Auch kann durch das Bereitstellen derartiger Druckspeicher dafür gesorgt werden, dass unmittelbar beim Start des Fahrzeugs, in welchem verschiedene Systembereiche noch nicht aktiv sind bzw. aktiv sein können, um Druckfluid bereitzustellen, dazu genutzt werden, verschiedene mit Druckfluid zu versorgende Systembereiche, wie insbesondere die Verdrängungskammern 24, ausreichend zu speisen.

## Patentansprüche

1. Torsionsschwingungsdämpfersystem für den Antriebsstrang eines Fahrzeugs, umfassend eine Primärseite (20) und eine über eine Dämpferfluidanordnung (28) mit der Primärseite (20) zur Drehung um eine Drehachse und zur Relativdrehung bezüglich einander gekoppelte Sekundärseite (22), **dadurch gekennzeichnet, dass** die Dämpferfluidanordnung (28) ein ein Drehmoment zwischen der Primärseite (20) und der Sekundärseite (22) übertragendes erstes Dämpferfluid mit geringerer Kompressibilität umfasst und ein bei Druckerhöhung des ersten Dämpferfluids belastetes zweites Dämpferfluid mit höherer Kompressibilität umfasst, ferner umfassend eine Drehdurchführung (30) zur Zufuhr/Abfuhr von erstem Dämpferfluid zu wenigstens einer erstes Dämpferfluid enthaltenden Verdrängungskammer (24) der Dämpfertluidanordnung (28), deren Volumen bei Relativdrehung der Primärseite (20) bezüglich der Sekundärseite (22) veränderbar ist, wodurch die Belastung des zweiten Dämpferfluids durch das erste Dämpferfluid veränderbar ist, ferner umfassend ein Druckfluiderzeugungssystem (32) zur Bereitstellung von über die Drehdurchführung (30) der Dämpferfluidanordnung (28) zuzuführendem erstem Dämpferfluid, wobei das Druckfluiderzeugungssystem (32) wenigstens zwei Druckfluidpumpen (36, 36') umfasst.

2. Torsionsschwingungsdämpfersystem nach Anspruch 1,
**dadurch gekennzeichnet, dass** jeder Druckfluidpumpe (36, 36') ein eigenständiger Druckfluidpumpenantrieb (34, 34') zugeordnet ist.

3. Torsionsschwingungsdämpfersystem nach Anspruch 1,
**dadurch gekennzeichnet, dass** mehrere Druckfluidpumpen (36, 36') durch einen gemeinsamen Druckfluidpumpenantrieb antreibbar sind.

4. Torsionsschwingungsdämpfersystem nach Anspruch 2 oder 3,
**dadurch gekennzeichnet, dass** wenigstens ein Druckfluidpumpenantrieb (34, 34') einen Elektromotor (34, 34') umfasst.

5. Torsionsschwingungsdämpfersystem nach einem der Ansprüche 1 bis 4, **dadurch gekennzeichnet, dass** jeden - Druckfluidpumpe (36, 36') ein Druckspeicher (50, 50') zugeordnet ist.

6. Torsionsschwingungsdämpfersystem nach einem der Ansprüche 1 bis 5, **dadurch gekennzeichnet, dass** eine der Druckfluidpumpen (36, 36') zur Erzeugung eines größeren Volumenstroms ausgebildet ist und eine andere der Druckfluidpumpen (36, 36') zur Erzeugung eines größeren Fluiddrucks ausgebildet ist.

7. Torsionsschwingungsdämofersystem für den Antriebsstrang eines Fahrzeugs, umfassend eine Primärseite (20) und eine über eine Dämpferfluidanordnung (28) mit der Primärseite (20) zur Drehung um eine Drehachse und zur Relativdrehung bezüglich einander gekoppelte Sekundärseite (22), **dadurch gekennzeichnet, dass** die Dämpferfluidanordnung (28) ein ein Drehmoment zwischen der Primärseite (20) und der Sekundärseite (22) übertragendes erstes Dämpferfluid mit geringerer Kompressibilität umfasst und ein bei Druckerhöhung des ersten Dämpferfluids belastetes zweites Dämpferfluid mit höherer Kompressibilität umfasst, ferner umfassend eine Drehdurchführung (30) zur Zufuhr/Abfuhr von erstem Dämpferfluid zu wenigstens einer erstes Dämpferfluid enthaltenden Verdrängungskammer (24) der Dämpferfluidanordnung (28), deren Volumen bei Relativdrehung der Primärseite (20) bezüglich der Sekundärseite (22) veränderbar ist, wodurch die Belastung des zweiten Dämpferfluids durch das erste Dämpferfluid veränderbar ist, ferner umfassend ein Druckfluiderzeugungssystern (32) zur Bereitstellung von über die Drehdurchführung (30) der Dämpferfluidanordnung (28) zuzuführendem erstem Dämpferfluid, wobei das Druckfluiderzeugungssystem (32) eine in einer Getriebeanordnung (18) angeordnete Getriebeölpumpe (102) sowie ferner eine durch einen Pumpenantriebsmotor (34) anzutreibende Druckfluidpumpe (36) umfasst.

8. Torsionsschwingungsdämpfersystem nach Anspruch 7,
**dadurch gekennzeichnet, dass** die Druckfluidpumpe (36) durch eine Ventilanordnung (82) von dem Druckfluidkreislauf der Getriebeölpumpe (102) abkoppelbar ist.

9. Torsionsschwingungsdämpfersystem nach Anspruch 7 oder 8.
**dadurch gekennzeichnet, dass** der Druckfluidpumpe (36) ein Druckspeicher (50) zugeordnet ist.

10. Torsionsschwingungsdämpfersystem nach einem der Ansprüche 1 bis 9,
**dadurch gekennzeichnet, dass** dem ersten Dämpferfluid eine Wärmetauscheranordnung (94) zur Erwärmung desselben zugeordnet ist.

11. Torsionsschwingungsdämpfersystem nach Anspruch 10,
**dadurch gekennzeichnet, dass** die Wärmetauscheranordnung (94) als Wärmetauschermedium ein Kühlfluid eines Antriebsaggregats (14) nutzt.

## Claims

1. Torsion vibration damper system for the drive train of a vehicle, comprising a primary side (20) and a secondary side (22) coupled to the primary side (20) via a damper fluid arrangement (28) for rotating about a rotation axis and for relative mutual rotation, **characterized by** the damper fluid arrangement (28) comprising a first damper fluid with lower compressibility transferring a torque between the primary side (20) and the secondary side (22) and a second damper fluid with higher compressibility loaded during pressure increase of the first damper fluid, further comprising a rotary feedthrough (30) for feeding/discharging the first damper fluid to at least one displacement chamber (24) of the damper fluid arrangement (28) containing a first damper fluid, the volume of the latter being variable by relative rotation of the primary side (20) in relation to the secondary side (22), whereby the load on the second damper fluid by the first damper fluid may be varied, further comprising a pressure fluid generation system (32) for providing a first damper fluid to be fed via the rotary feedthrough (30) of the damper fluid arrangement (28), the pressure fluid generation system (32) comprising at least two pressure fluid pumps (36, 36').

2. Torsion vibration damper system according to claim 1,
**characterized by** an independent pressure fluid pump drive (34, 34') being associated to each pressure fluid pump (36, 36').

3. Torsion vibration damper system according to claim 1,
**characterized in that** several pressure fluid pumps (36, 36') can be driven by a common pressure fluid pump drive.

4. Torsion vibration damper system according to claim 2 or 3,
**characterized by** at least one pressure fluid pump drive (34, 34') comprising an electric motor.

5. Torsion vibration damper system according to one of claims 1 to 4,
**characterized by** a pressure accumulator (50, 50') being associated to each pressure fluid pump (36, 36').

6. Torsion vibration damper system according to one of claims 1 to 5,
**characterized by** one of the pressure fluid pumps (36, 36') being adapted for generating a bigger volume flow and by another of the pressure fluid pumps (36, 36') being adapted for generating a bigger fluid pressure.

7. Torsion vibration damper system for the drive train of a vehicle, comprising a primary side (20) and a secondary side (22) coupled to the primary side (20) via a damper fluid arrangement (28) for rotating about a rotation axis and for relative mutual rotation, **characterized by** the damper fluid arrangement (28) comprising a first damper fluid with lower compressibility transferring a torque between the primary side (20) and the secondary side (22) and a second damper fluid with higher compressibility loaded during pressure increase of the first damper fluid, further comprising a rotary feedthrough (30) for feeding/discharging the first damper fluid to at least one displacement chamber (24) of the damper fluid arrangement (28) containing a first damper fluid, the volume of the latter being variable by relative rotation of the primary side (20) in relation to the secondary side (22), whereby the load on the second damper fluid by the first damper fluid may be varied, further comprising a pressure fluid generation system (32) for providing a first damper fluid to be fed via the rotary feedthrough (30) of the damper fluid arrangement (28), the pressure fluid generation system (32) comprising a gearbox oil pump (102) arranged in a gear arrangement (18) and further comprising a pressure fluid pump (36) to be driven by a pump drive motor (34).

8. Torsion vibration damper system according to claim 7,
**characterized in that** the pressure fluid pump (36) can be decoupled from the pressure fluid circuit of the gearbox oil pump (102) by a valve arrangement (82).

9. Torsion vibration damper system according to claim 7 or 8,
**characterized by** a pressure accumulator (50) being associated to the pressure fluid pump (36).

10. Torsion vibration damper system according to one of claims 1 to 9,
**characterized by** a heat exchanger arrangement (94) being associated to the first damper fluid for heating the latter.

11. Torsion vibration damper system according to claim 10,
**characterized by** the heat exchanger arrangement (94) using a cooling fluid of a drive assembly (14) as heat exchanger medium.

## Revendications

1. Système d'amortissement de vibrations de torsion pour la chaîne cinématique d'un véhicule, comprenant un côté primaire (20) et un côté secondaire (22) couplé par un arrangement de fluide d'amortissement (28) au côté primaire (20) pour la rotation autour d'un axe de rotation et pour la rotation relative mutuelle, **caractérisé par** l'arrangement de fluide d'amortissement (28) comprenant un premier fluide d'amortissement avec une compressibilité réduite transmettant un moment de force entre le côté primaire (20) et le côté secondaire (22) et un deuxième fluide d'amortissement avec une compressibilité élevée, chargé lors de l'augmentation de pression du premier fluide d'amortissement, comprenant de plus une conduite rotatoire (30) pour l'alimentation/l'évacuation du premier fluide d'amortissement à au moins une chambre de déplacement (24) de l'arrangement de fluide d'amortissement (28) comprenant un premier fluide d'amortissement, le volume de la dernière étant variable par un mouvement relatif du côté primaire (20) relatif au côté secondaire (22), le chargement du deuxième fluide d'amortissement par le premier fluide d'amortissement étant ainsi variable, comprenant de plus un système de génération de fluide de pression (32) pour prévoir un premier fluide d'amortissement à conduire à l'arrangement de fluide d'amortissement (28) par la conduite rotatoire (30), le système de génération de fluide de pression (32) comprenant au moins deux pompes (36, 36') de fluide de pression.

2. Système d'amortissement de vibrations de torsion selon la revendication 1,
**caractérisé par** une commande de pompe de fluide (34, 34') indépendante étant associée à chaque pompe de fluide de pression (36, 36').

3. Système d'amortissement de vibrations de torsion selon la revendication 1,
**caractérisé en ce que** plusieurs pompes de fluide de pression (36, 36') peuvent être commandées par une commande de pompe de fluide commune.

4. Système d'amortissement de vibrations de torsion selon la revendication 2 ou 3,
**caractérisé par** au moins une commande de pompe de fluide (34, 34') comprenant un moteur électrique (34, 34').

5. Système d'amortissement de vibrations de torsion selon une des revendications 1 à 4,
**caractérisé par** un accumulateur de pression (50, 50') étant associé à chaque pompe de fluide de pression (36, 36').

6. Système d'amortissement de vibrations de torsion selon une des revendications 1 à 5,
**caractérisé par** une des pompes de fluide de pression (36, 36') étant adaptée pour générer un plus grand flux de volume et une autre des pompes de fluide de pression (36, 36') étant adaptée pour générer une plus grande pression de fluide.

7. Système d'amortissement de vibrations de torsion pour la chaîne cinématique d'un véhicule, comprenant un côté primaire (20) et un côté secondaire (22) couplé par un arrangement de fluide d'amortissement (28) au côté primaire (20) pour la rotation autour d'un axe de rotation et pour la rotation relative mutuelle, **caractérisé par** l'arrangement de fluide d'amortissement (28) comprenant un premier fluide d'amortissement avec une compressibilité réduite transmettant un moment de force entre le côté primaire (20) et le côté secondaire (22) et un deuxième fluide d'amortissement avec une compressibilité élevée, chargé lors de l'augmentation de pression du premier fluide d'amortissement, comprenant de plus une conduite rotatoire (30) pour l'alimentation/l'évacuation du premier fluide d'amortissement à au moins une chambre de déplacement (24) de l'arrangement de fluide d'amortissement (28) comprenant un premier fluide d'amortissement, le volume de la dernière étant variable par un mouvement relatif du côté primaire (20) relatif au côté secondaire (22), le chargement du deuxième fluide d'amortissement par le premier fluide d'amortissement étant ainsi variable, comprenant de plus un système de génération de fluide de pression (32) pour prévoir un premier fluide d'amortissement à conduire à l'arrangement de fluide d'amortissement (28) par la conduite rotatoire (30), le système de génération de fluide de pression (32) comprenant une pompe d'huile à engrenages (102) arrangée dans un arrangement d'engrenage et comprenant aussi une pompe de fluide de pression (36) qui peut être commandée par une commande de pompe de fluide (34).

8. Système d'amortissement de vibrations de torsion selon la revendication 7,
**caractérisé par** la pompe de fluide de pression (36) pouvant être découplée du circuit de fluide de pression de la pompe d'huile à engrenages (102) par un arrangement de soupape (82).

9. Système d'amortissement de vibrations de torsion selon la revendication 7 ou 8,
**caractérisé par** un accumulateur de pression (50) étant associé à la pompe de fluide de pression (36).

10. Système d'amortissement de vibrations de torsion selon une des revendications 1 à 9,
**caractérisé par** un arrangement d'échangeur de chaleur (94) étant associé au premier fluide d'amortissement pour chauffer ce dernier.

11. Système d'amortissement de vibrations de torsion selon la revendication 10,
**caractérisé par** l'arrangement d'échangeur de chaleur (94) utilisant un fluide de refroidissement d'un agrégat de commande (14) en tant que médium d'échangeur de chaleur.
